# EUROPEAN PATENT APPLICATION

(11) **EP 4 541 511 A1**
(43) Date of publication of application: **23.04.2025**
(21) Application number: 23845652.9
(22) Date of filing: 27.07.2023
(51) Int. Cl.: B24B 47/12, B24B 41/04, B24B 23/02

(54) **MECHANISM HAVING BIDIRECTIONAL ROTATION FUNCTION AND BIDIRECTIONAL GRINDING MACHINE**

(30) Priority: 28.07.2022 CN 202210900293
(71) Applicant: Zhejiang Prulde Electric Appliance Co., Ltd., Jinhua, Zhejiang 321035 (CN)
(72) Inventor: YANG, Weiming, Jinhua, Zhejiang 321035 (CN)
(74) Representative: karo IP
(86) International application number: PCT/CN2023/109599
(87) International publication number: WO 2024/022445

(57) **Abstract**

Disclosed are a bidirectionally rotatable mechanism and a bidirectional grinder; the bidirectionally rotatable mechanism includes an actuator, an inner shaft, and an outer shaft, the inner shaft and the outer shaft being in transmission connection with the actuator, the outer shaft sleeving on the inner shaft; a speed reducer is arranged between an output shaft of the actuator and the inner shaft; two ends of the speed reducer are in transmission connection with the output shaft and the inner shaft, respectively; a first gear is arranged on a surface of the inner shaft; an outer transmission assembly in transmission connection with the outer shaft is disposed sleeving on the inner shaft, the outer transmission assembly including a stationary base, a planetary gear meshing with the first gear, and a gear carrier connected to the outer shaft, the planetary gear being disposed between the holder and the gear carrier. The grinder is bidirectionally rotatable with an improved grinding effect.

## Description

### FIELD

The subject matter described herein relates to a grinding machine and more particularly relates to a bidirectionally rotatable mechanism and a bidirectional grinder.

### BACKGROUND

A grinder is a tool for grinding a wall surface or the like. Conventional grinders can only rotate unidirectionally, with marks left and dust created. The conventional grinders are strenuous to operate with low work efficiency and unsatisfactory grinding effect; in addition, they require repetitively grinding back and forth, which is a laborious work.

### SUMMARY

A bidirectionally rotatable mechanism and a bidirectional grinder are described herein; the grinder is bidirectionally rotatable with an improved grinding effect.

The disclosure adopts a technical solution below:
a bidirectionally rotatable mechanism, comprising an actuator, an inner shaft, and an outer shaft, the inner shaft and the outer shaft being in transmission connection with the actuator, the outer shaft being disposed sleeving on the inner shaft, wherein a speed reducer is arranged between an output shaft of the actuator and the inner shaft; the speed reducer comprises an inner ring gear in which a reduction gear assembly is embedded, the reduction gear assembly comprising a planetary reduction gear meshing with the inner ring gear and a transmission shaft, the planetary reduction gear being in transmission connection with the output shaft, the transmission shaft being in transmission connection with the inner shaft; a first gear is arranged on a surface of the inner shaft; an outer transmission assembly in transmission connection with the outer shaft is disposed sleeving on the inner shaft, the outer transmission assembly comprising a gear, a holder, a planetary gear meshing with the first gear, and a gear carrier connected to the outer shaft; an outer toothed ring is provided at a lower end of the gear, the holder being disposed sleeving on the outer toothed ring; and the planetary gear comprises an epicyclic inner toothed portion and an epicyclic outer toothed portion, the epicyclic inner toothed portion meshing with the outer toothed ring, the epicyclic outer toothed portion meshing with the first gear, the planetary gear being disposed between the holder and the gear carrier.

The disclosure offers the following benefits:

In this implementation, the actuator is in transmission connection with the inner shaft; after the actuator is activated, it drives the inner shaft to rotate; a first gear is arranged on a surface of the inner shaft; an outer transmission assembly is disposed sleeving on the inner shaft, the outer transmission assembly comprising a stationary base, a planetary gear, and a gear carrier; the planetary gear is disposed meshing with the first gear; a rotating direction of the planetary gear is counter to a rotating direction of the first gear; the gear carrier rotates with the planetary gear; the gear carrier is connected to the outer shaft; the gear carrier drives the outer shaft to rotate; as such, the outer shaft and the inner shaft rotate in different directions, realizing bi-directional rotation. This implementation eliminates a need of repetitively grinding back and forth, leaves no marks during the grinding process, achieves a better grinding effect, and can effectively enhance grinding efficiency.

Additionally in this implementation, the outer shaft can rotate reversely about the inner shaft via the first gear, the planetary gear, and the gear carrier only, which offers a simple transmission construction that facilitates installation and maintenance; meanwhile, with less transmission stages, this implementation offers higher transmission efficiency with less energy consumption; moreover, since the outer transmission assembly is disposed sleeving on the inner shaft and coaxial with the inner shaft, this implementation offers a dense connection with reduced mounting footprint, so that the overall structure of this implementation is more compact and portable.

In some implementations, the reduction gear assembly comprises a first-stage planetary assembly and a second-stage planetary assembly, the first-stage planetary assembly and the second-stage planetary assembly each comprising a securing disk and a planetary reduction gear mounted on an upper end surface of the securing disk, the output shaft being in transmission connection with the planetary reduction gear of the first-stage planetary assembly; a transmission gear is arranged at a lower end surface of the securing disk of the first-stage planetary assembly, the transmission gear meshing with the planetary reduction gear of the second-stage planetary assembly; and the transmission shaft is disposed at a lower end surface of the securing disk of the second-stage planetary assembly.

In some implementations, a coupling sleeve is arranged between the transmission shaft and the inner shaft, a fitting portion is provided at respective end portions of the transmission shaft and the inner shaft, and a fit-in hole is provided on the coupling sleeve, the coupling sleeve facilitating the transmission shaft to rotate synchronously with the inner shaft.

In some implementations, an outer rotary disk is arranged at a bottom end of the outer shaft, an inner rotary disk is provided at a bottom end of the inner shaft, and a recessed cavity configured to receive the inner rotary disk is provided in a central portion of the outer rotary disk.

In some implementations, a threaded hole is provided at a bottom end surface of the inner shaft; a connector is arranged between the inner shaft and the inner rotary disk, the connector being connected to the inner shaft via a screw; a plurality of bumps are arranged at a peripheral side surface of the connector, and a snap block is provided on the inner rotary disk, the snap block being fitted with the bumps to implement connection between the inner shaft and the inner rotary disk.

The disclosure further describes a bidirectional grinder, comprising a grinder body, wherein an actuator, an inner shaft, and an outer shaft are arranged in the grinder body, the inner shaft and the outer shaft being in transmission connection with the actuator, an inner rotary disk being attached to an end portion of the inner shaft, an outer rotary disk being attached to an end portion of the outer shaft; and the bidirectionally rotatable mechanism as noted *supra* is arranged between the actuator, the inner shaft, and the outer shaft.

Other features and advantages of the disclosure will be described in detail through specific implementations below with reference to the accompanying drawings.

### BRIEF DESCRIPTION OF THE DRAWINGS

Hereinafter, the disclosure will be described in further detail with reference to the accompanying drawings.
Fig. 1 is an exploded view of a first implementation of the disclosure;
Fig. 2 is a structural view of the first implementation of the disclosure;
Fig. 3 is a sectional view of Fig. 2.

Reference Numerals: 1. actuator; 11. output shaft; 2. speed reducer; 21. inner ring gear; 22. first-stage planetary assembly; 221. planetary reduction gear of first-stage planetary assembly; 222. transmission gear; 23. second-stage planetary assembly; 231. planetary reduction gear of second-stage planetary assembly; 232. transmission shaft; 3. inner shaft; 31. first gear; 32. inner rotary disk; 321. snap block; 33. connector; 331. bump; 4. outer shaft; 41. outer rotary disk; 5. outer transmission assembly; 51. gear carrier; 52. planetary gear; 53. holder; 54. gear; 541. outer toothed ring; 6. coupling sleeve.

### DETAILED DESCRIPTION OF EMBODIMENTS

Hereinafter, the technical solutions of the disclosure will be explained and illustrated through implementations with reference to the accompanying drawings. However, the implementations described herein are only some embodiments of the disclosure, not all of them. Other implementations obtained by those skilled in the art based on the examples in the implementations without exercise of inventive work all fall within the protection scope of the disclosure.

In the description of the disclosure, it needs to be understood that the orientational or positional relationships indicated by the terms "center," "longitudinal," "transverse," "length," "width," "thickness", "upper," "lower," "front," "rear," "left," "right," "vertical," "horizontal," "top," "bottom," "inner," "clockwise," "counterclockwise," etc. are orientational and positional relationships based on the drawings, which are intended only for facilitating description of the disclosure and simplifying relevant illustrations, not for indicating or implying that the devices or elements compulsorily possess those specific orientations and are compulsorily configured and operated with those specific orientations; therefore, such terms should not be construed as limitations to the disclosure.

Besides, the terms "first" and "second" are only used for descriptive purposes, which shall not be construed as indicating or implying relative importance or implicitly indicating the amount of a referred to technical feature. Therefore, the features limited by "first" and "second" may explicitly or implicitly include one or more of such features. In the description of the disclosure, unless otherwise indicated, "plurality" indicates two or above.

In the disclosure, unless otherwise explicitly provided and limited, the terms such as "mount," "connect," "couple," and "fix" should be understood broadly, which, for example, may refer to a fixed connection, a detachable connection, or an integral connection; which may be a mechanical connection or an electrical connection; which may be a direct connection or an indirect connection via an intermediate medium; which may also be a communication between the insides of two elements. To a person of normal skill in the art, specific meanings of the above terms in the disclosure may be construed based on specific situations.

### First Implementation

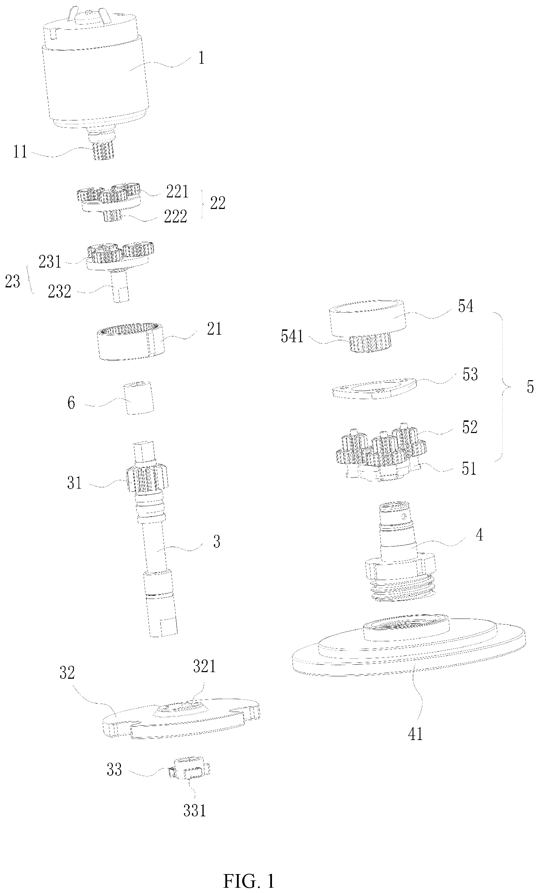

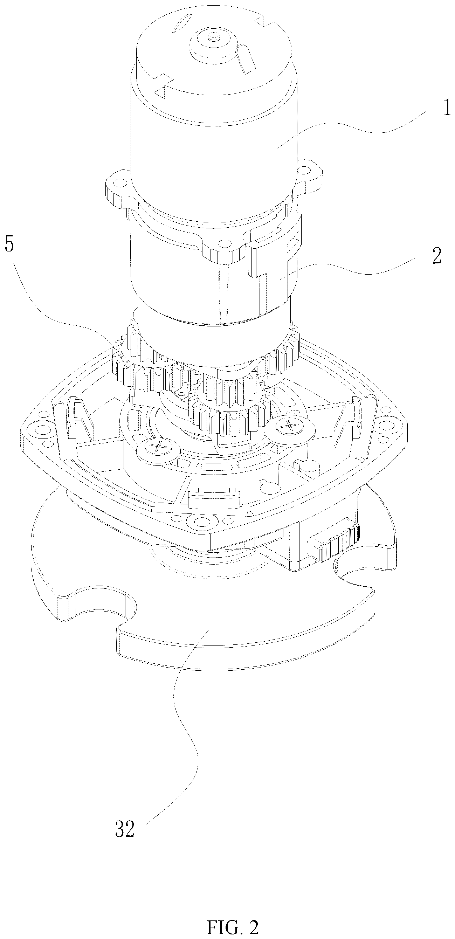

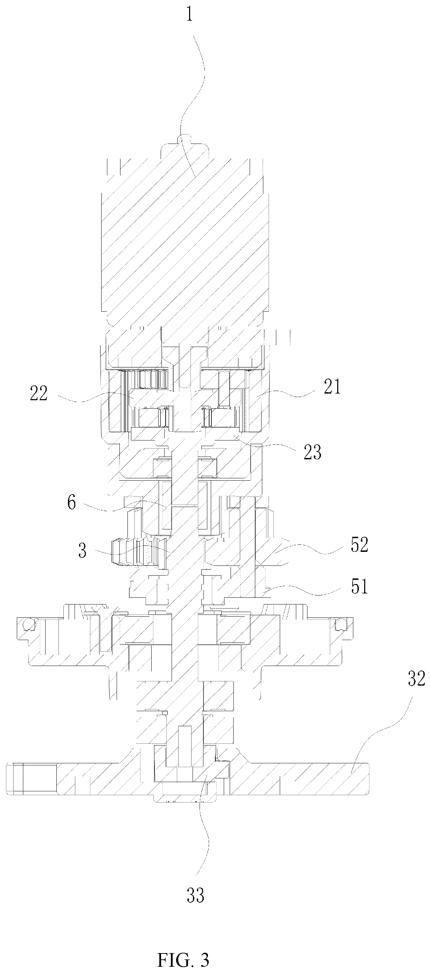

As illustrated in Figs. 1 through 3, a bidirectionally rotatable mechanism described herein comprises an actuator 1, an inner shaft 3, and an outer shaft 4, the inner shaft 3 and the outer shaft 4 being in transmission connection with the actuator 1, the outer shaft 4 being disposed sleeving on the inner shaft 3; a speed reducer 2 is arranged between an output shaft 11 of the actuator 1 and the inner shaft 3, two ends of the speed reducer 2 being in transmission connection with the output shaft 11 and the inner shaft 3, respectively; a first gear 31 is arranged on a surface of the inner shaft 3; an outer transmission assembly 5 in transmission connection with the outer shaft 4 is disposed sleeving on the inner shaft 3, the outer transmission assembly 5 comprising a stationary base, a planetary gear 52, and a gear carrier 51, the stationary base comprising a gear 54 and a holder 53, the holder 53 being arranged between the planetary gear 52 and the gear 54, the planetary gear 52 being disposed between the holder 53 and the gear carrier 51; an outer toothed ring 541 is arranged at a lower end of the gear 54, the holder 53 being disposed sleeving on the outer toothed ring 541 with a gap therebetween. In this implementation, three planetary gears 52 are provided in total, the three planetary gears 52 being distributed at even intervals along a peripheral direction of the first gear 31, the planetary gear 52 comprising an epicyclic inner toothed portion and an epicyclic outer toothed portion, a diameter of the epicyclic inner toothed portion being less than that of the epicyclic outer toothed portion, the epicyclic inner toothed portion being disposed above the epicyclic outer toothed portion, the epicyclic inner toothed portion and the outer toothed ring 541 meshing with each other, the epicyclic outer toothed portion and the first gear 31 meshing with each other; in this implementation, the epicyclic inner toothed portion and the epicyclic outer toothed portion are formed into a one-piece structure.

In this implementation, when the inner shaft 3 is rotating, the first gear 31 rotates synchronously with the inner shaft 3, the three planetary gears 52 rotate reversely relative to the first gear 31 while revolving about the first gear 31 in a direction counter to a rotating direction of the first gear 31. Since the holder 53 and the gear carrier 51 are connected to the planetary gears 52, i.e., the holder 53 and the gear carrier 51 revolve with the planetary gears 52, the gear carrier 51 is connected to the outer shaft 4, the gear carrier 51 drives the outer shaft 4 to rotate; as such, the outer shaft 4 and the inner shaft 3 rotate in different directions, respectively, realizing bi-directional rotation. This implementation eliminates a need of repetitively grinding back and forth, leaves no marks during the grinding process, achieves a better grinding effect, and can efficiently enhance grinding efficiency.

Additionally in this implementation, the outer shaft 4 can rotate reversely about the inner shaft 3 via the first gear 31, the planetary gear 52, and the gear carrier 51 only, which offers a simple transmission construction that facilitates installation and maintenance; meanwhile, with less transmission stages, this implementation offers higher transmission efficiency with less energy consumption; moreover, since the outer transmission assembly 5 is disposed sleeving on the inner shaft 3 and coaxial with the inner shaft 3, this implementation offers a dense connection with reduced mounting footprint, so that the overall structure of this implementation is more compact and portable.

In this implementation, the speed reducer 2 comprises an inner ring gear 21 in which a reduction gear assembly is embedded, the reduction gear assembly comprising a first-stage planetary assembly 22 and a second-stage planetary assembly 23, the first-stage planetary assembly 22 and the second-stage planetary assembly 23 each comprising a securing disk and a planetary reduction gear mounted at an upper end surface of the securing disk; the planetary reduction gear 221 of the first-stage planetary assembly 22 is disposed surrounding a peripheral side of the output shaft 11 of the actuator 1, the output shaft 11 being in transmission connection with the planetary reduction gear 221 of the first-stage planetary assembly 22; a transmission gear 222 is disposed at a lower end surface of the securing disk of the first-stage planetary assembly 22, the transmission gear 222 meshing with the planetary reduction gear 231 of the second-stage planetary assembly 23; a transmission shaft 232 is provided at a lower end surface of the securing disk of the second-stage planetary assembly 23; a coupling sleeve 6 is arranged between the transmission shaft 232 and the inner shaft 3; a fitting portion is arranged at respective end portions of the transmission shaft 232 and the inner shaft 3, while a fit-in hole is provided on the coupling sleeve 6; the coupling sleeve 6 facilitates the transmission shaft 232 to rotate synchronously with the inner shaft 3; the actuator 1 actuates the output shaft 11 to rotate; the output shaft 11 drives the planetary reduction gear 221 of the first-stage planetary assembly 22 to rotate, which drives the transmission gear 222 at the lower end surface of the securing disk of the first-stage planetary assembly 22 to rotate; the transmission gear 222 drives the planetary reduction gear 231 of the second-stage planetary assembly 23 to rotate, thereby driving the transmission shaft 232 to rotate; due to connection via the coupling sleeve 6, the inner shaft 3 rotates synchronously with the transmission shaft 232, which realizes transmission connection between the actuator 1 and the inner shaft 3; meanwhile, the speed reducer 2 can also reduce a rotating speed of the inner shaft 3.

In this implementation, an outer rotary disk 41 is provided at a bottom end of the outer shaft 4, an inner rotary disk 32 is provided at a bottom end of the inner shaft 3, and an recessed cavity configured to accommodate the inner rotary disk 32 is provided in a central portion of the outer rotary disk 41; the inner rotary disk 32 rotates on the central portion of the outer rotary disk 41; the inner rotary disk 32 maintains coaxial with the outer rotary disk 41; a bottom end surface of the inner rotary disk 32 is flush with a bottom end surface of the outer rotary disk 41; a threaded hole is provided at a bottom end surface of the inner shaft 3; a connector 33 is arranged between the inner shaft 3 and the inner rotary disk 32; the connector 33 is connected to the inner shaft 3 via a screw; a plurality of bumps 331 are arranged at a peripheral side surface of the connector 33, and a snap block 321 is provided on the inner rotary disk 32, the snap block 321 being fitted with the bumps to realize connection between the inner shaft 3 and the inner rotary disk 32.

### Second Implementation

This implementation further describes a bidirectional grinder, comprising: a grinder body, inside the grinder body being provided an actuator 1, an inner shaft 3, and an outer shaft 4, the inner shaft 3 and the outer shaft 4 being in transmission connection with the actuator 1; an inner rotary disk 32 is attached to an end portion of the inner shaft 3; an outer rotary disk 41 is attached to an end portion of the outer shaft 4; and the bidirectionally rotational mechanism described in the first implementation or other equivalent implementations is arranged between the actuator 1, the inner shaft 3, and the outer shaft 4. This implementation realizes bidirectional rotation, eliminates a need of repetitively grinding back and forth, leaves no marks during the grinding process, achieves a better grinding effect, and can effectively enhance grinding efficiency.

What have been described above are only example implementations of the disclosure; however, the protection scope of the disclosure is not limited thereto. A person skilled in the art should understand that the disclosure includes, but is not limited to, the contents described in the drawings and the embodiments. Any modifications without departing from the functions and structural principles of the disclosure will be included within the scope of the claims.

## Claims

1. A bidirectionally rotatable mechanism, comprising an actuator, an inner shaft, and an outer shaft, the inner shaft and the outer shaft being in transmission connection with the actuator, the outer shaft being disposed sleeving on the inner shaft, wherein a speed reducer is arranged between an output shaft of the actuator and the inner shaft; the speed reducer comprises an inner ring gear in which a reduction gear assembly is embedded, the reduction gear assembly comprising a planetary reduction gear meshing with the inner ring gear and a transmission shaft, the planetary reduction gear being in transmission connection with the output shaft, the transmission shaft being in transmission connection with the inner shaft; a first gear is arranged on a surface of the inner shaft; an outer transmission assembly in transmission connection with the outer shaft is disposed sleeving on the inner shaft, the outer transmission assembly comprising a gear, a holder, a planetary gear meshing with the first gear, and a gear carrier connected to the outer shaft; an outer toothed ring is provided at a lower end of the gear, the holder being disposed sleeving on the outer toothed ring with a gap therebetween; and the planetary gear comprises an epicyclic inner toothed portion and an epicyclic outer toothed portion, the epicyclic inner toothed portion meshing with the outer toothed ring, the epicyclic outer toothed portion meshing with the first gear, the planetary gear being disposed between the holder and the gear carrier.

2. The bidirectionally rotatable mechanism according to claim 1, wherein the reduction gear assembly comprises a first-stage planetary assembly and a second-stage planetary assembly, the first-stage planetary assembly and the second-stage planetary assembly each comprising a securing disk and a planetary reduction gear mounted on an upper end surface of the securing disk, the output shaft being in transmission connection with the planetary reduction gear of the first-stage planetary assembly; a transmission gear is arranged at a lower end surface of the securing disk of the first-stage planetary assembly, the transmission gear meshing with the planetary reduction gear of the second-stage planetary assembly; and the transmission shaft is disposed at a lower end surface of the securing disk of the second-stage planetary assembly.

3. The bidirectionally rotatable mechanism according to claim 2, wherein a coupling sleeve is arranged between the transmission shaft and the inner shaft, a fitting portion is provided at respective end portions of the transmission shaft and the inner shaft, and a fit-in hole is provided on the coupling sleeve, the coupling sleeve facilitating the transmission shaft to rotate synchronously with the inner shaft.

4. The bidirectionally rotatable mechanism according to claim 1, wherein an outer rotary disk is arranged at a bottom end of the outer shaft, an inner rotary disk is provided at a bottom end of the inner shaft, and a recessed cavity configured to receive the inner rotary disk is provided in a central portion of the outer rotary disk.

5. The bidirectionally rotatable mechanism according to claim 4, wherein a threaded hole is provided at a bottom end surface of the inner shaft; a connector is arranged between the inner shaft and the inner rotary disk, the connector being connected to the inner shaft via a screw; a plurality of bumps are arranged at a peripheral side surface of the connector; and a snap block is provided on the inner rotary disk, the snap block being fitted with the bumps to implement connection between the inner shaft and the inner rotary disk.

6. A bidirectional grinder, comprising a grinder body, wherein an actuator, an inner shaft, and an outer shaft are arranged in the grinder body, the inner shaft and the outer shaft being in transmission connection with the actuator, an inner rotary disk being attached to an end portion of the inner shaft, an outer rotary disk being attached to an end portion of the outer shaft; and the bidirectionally rotatable mechanism according to any one of claims 1 to 5 is arranged between the actuator, the inner shaft, and the outer shaft.
